# DEMANDE DE BREVET EUROPEEN

(11) **EP 3 683 482 A1**
(43) Date de publication de la demande: **22.07.2020**
(21) Numéro de dépôt: 19215587.7
(22) Date de dépôt: 12.12.2019
(51) Int. Cl.: F16L 21/035, F16L 27/10

(54) **DISPOSITIF D'ÉVACUATION COMPRENANT UNE LIAISON CONTINUE ÉLASTIQUEMENT DÉFORMABLE**

(30) Priorité: 18.01.2019 FR 1900473
(71) Demandeur: Wirquin Plastiques, 44470 Carquefou (FR)
(72) Inventeur: Le Coent, Daniel, 44470 Carquefou (FR); Bacouet, Alban, 44980 Sainte Luce sur Loire (FR)
(74) Mandataire: Lequien, Philippe

(57) **Abrégé**

L'invention concerne un dispositif d'évacuation (1) destiné à être monté dans une installation d'évacuation d'un fluide, le dispositif d'évacuation comprenant :
- une première partie rigide (11) ;
- une seconde partie rigide (12) ;
- une liaison continue (2) élastiquement déformable couplant la première partie rigide à la seconde partie rigide, la liaison continue présentant une surface interne (20) entre la première partie rigide et la seconde partie rigide ;
- des moyens de protection (3) de la liaison continue, les moyens de protection étant distincts de la liaison continue et venant en recouvrement au moins partiel de la surface interne de la liaison continue.

## Description

Le domaine de l'invention est celui de la conception et de la fabrication d'équipements sanitaires.

Plus précisément, l'invention concerne un dispositif d'évacuation destiné à présenter une section pouvant être potentiellement coudée pour rediriger un fluide à évacuer.

L'invention s'applique en particulier, mais non exclusivement, aux installations sanitaires, par exemple pour l'évacuation d'eau à partir d'un évier, d'un lavabo, d'une baignoire, d'un bac de douche, d'un WC...

Dans le domaine de l'invention, il est classique de mettre en oeuvre dans une conduite d'évacuation d'eau des parties droites ou coudées destinées à s'adapter au chemin d'écoulement souhaité.

Classiquement, les coudes d'évacuation sont soit rigides (PVC à coller), soit souple (coude réalisé en matière souple). Des portions de parties droites peuvent également être rigides ou souples, en mono-matière ou bi-matière.

Dans la pratique, les coudes actuels proposés sont généralement rigides, et nécessitent donc d'avoir une série de modèles correspondant à des angles communément admis (87,5°, 45°, 37,5°). Avec les solutions actuelles, le consommateur (bricoleur) ou le professionnel doit savoir ce qu'il veut dans la gamme très large des coudes rigides existants ; des concepts actuels le font entrer dans un univers complexe où se côtoient des familles de produits parfois proches les uns des autres où l'on ne s'y retrouve plus.

Une difficulté classique rencontrée avec les coudes rigides, et plus généralement avec les dispositifs d'évacuation, et d'avoir à forcer sur le tube, ou sur la sortie d'évacuation du dispositif d'évacuation, pour que la tubulure puisse être posée (cas le plus fréquent en rénovation lorsque les tubes à raccorder sortent des murs, ou lors de l'installation d'une tubulure et d'un dispositif d'évacuation dans un ensemble maçonné).

Il existe cependant des solutions alternatives, en posant une tubulure courte souple, à coller ou à raccorder par « push-fit », ou encore en utilisant des coudes en matière complètement souple. Ces solutions sont très différentes en visuel et dénotent par rapport au produit courant.

Un exemple de coude souple est notamment décrit dans le document de brevet publié sous le numéro JP-2002071081. Ce document décrit un coude flexible de raccordement comprenant des éléments d'extrémité et un corps flexible, les éléments d'extrémité étant rapportés et fixés à l'intérieur du corps flexible.

On connaît également le coude souple décrit dans le document de brevet publié sous le numéro FR-2942291. Ce document décrit un coude souple destiné à être monté entre deux conduits d'évacuation d'un fluide, ce coude souple comprenant une liaison continue élastiquement déformable.

De tels coudes permettent de faire varier l'angle formé par l'arrivée d'eau et la sortie d'eau.

La pratique a néanmoins démontré que de tels coudes souples, ou de tels dispositifs d'évacuation munis de liaison continue élastiquement déformable, ne présentent pas une longévité suffisamment importante.

En effet, dans le cas de la liaison continue élastiquement déformable, il a été observé une détérioration plus rapide de cette liaison continue élastiquement déformable par rapport aux parties rigides encadrant cette liaison.

La liaison continue élastiquement déformable est par exemple réalisée par surmoulage du corps flexible sur les extrémités de raccordement rigide.

Cette conception induit le fait que la liaison continue présente une surface interne entre les extrémités de raccordement rigide. La liaison continue présente alors, par le biais de sa surface interne, une sensibilité beaucoup plus importante aux agressions mécaniques (passage des liquides et particules à évacuer, passage d'outils de nettoyage tel que par exemple un furet, ...).

La pratique a également démontré que de tels coudes souples ne peuvent pas être intégrés sous un receveur où la tubulure est par exemple intégrée au sein d'une chape d'un matériau maçonné. En effet, le matériau maçonné peut exercer une pression déformant de manière trop importante le corps flexible ou la liaison continue élastiquement déformable, rendant ainsi impropre au fonctionnement ladite liaison.

L'invention a notamment pour objectif de palier les inconvénients de l'art antérieur.

Plus précisément, l'invention a pour objectif de proposer un dispositif d'évacuation comprenant une liaison continue élastiquement déformable qui présente une longévité et une résistance accrue par rapport aux dispositifs selon l'art antérieur.

L'invention a également pour objectif de fournir un tel dispositif d'évacuation qui permet l'utilisation d'outils de nettoyage, tel qu'un furet, sans risquer de dégrader la liaison continue élastiquement déformable et plus généralement l'étanchéité du dispositif d'évacuation.

L'invention a encore pour objectif de fournir un tel dispositif d'évacuation qui puisse être intégré sans problème au sein d'une chape d'un matériau maçonné sans risquer de dégrader ses performances d'évacuation.

Ces objectifs, ainsi que d'autres qui apparaîtront par la suite, sont atteints grâce à l'invention qui a pour objet un dispositif d'évacuation destiné à être monté dans une installation sanitaire d'évacuation d'un fluide, le dispositif d'évacuation comprenant :
- une première partie rigide ;
- une seconde partie rigide ;
- une liaison continue élastiquement déformable couplant la première partie rigide à la seconde partie rigide,
la première partie rigide et la seconde partie rigide étant des tubes, la liaison continue présentant une surface interne entre la première partie rigide et la seconde partie rigide, caractérisé en ce qu'il comprend des moyens de protection de la liaison continue, les moyens de protection étant distincts de la liaison continue et venant en recouvrement au moins partiel de la surface interne de la liaison continue, la liaison continue élastiquement déformable étant surmoulée sur les moyens de protection.

Grâce au dispositif selon l'invention, un angle peut être donné au niveau de la liaison continue élastiquement déformable, la liaison continue élastiquement déformable permettant de maîtriser et de contrôler la déformation de la partie flexible du dispositif d'évacuation. Cette liaison continue élastiquement déformable exerce un effet de ressort qui permet de ramener le coude formé dans une position d'origine, ce qui lui permet ainsi de conserver la forme de l'évacuation par défaut, c'est-à-dire la forme selon laquelle le dispositif d'évacuation présente un angle prédéterminé ou non.

Un installateur peut monter aisément le dispositif d'évacuation selon l'invention grâce à la latitude laissée vis-à-vis de l'angle formé par l'entrée du fluide et la sortie du fluide, résultante de la liaison continue élastiquement déformable, pour coupler le dispositif d'évacuation au sein d'une tubulure pouvant présenter des alignements qui ne sont pas parfaits.

Aussi, grâce au principe de l'invention, le dispositif d'évacuation peut être intégré au sein d'une installation d'évacuation d'un fluide sans risque qu'un nettoyage mécanique, par exemple à l'aide d'un furet, du circuit d'évacuation constitué ne provoque une détérioration et ainsi une perte d'étanchéité au niveau de la liaison continue élastiquement déformable.

En effet, les moyens de protection recouvrent intégralement la liaison continue selon une conception qui permet le passage de l'outil de nettoyage sans que cet outil ne puisse venir au contact direct de la liaison continue et ne puisse ainsi la dégrader. En venant en recouvrement intégral de la surface interne de la liaison continue, les moyens de protection offrent ainsi une protection complète de la surface interne de la liaison continue.

Aussi, ces moyens de protection permettent de faciliter l'intégration du dispositif d'évacuation au sein d'une chape d'un matériau maçonné, tel que cela est détaillé par la suite.

Tel qu'évoqué précédemment, la liaison continue élastiquement déformable est surmoulée sur les moyens de protection. La liaison continue élastiquement déformable surmoulée sur les moyens de protection couple (ou « assemble ») la première partie rigide et la seconde partie rigide.

Une telle conception permet de renforcer la liaison continue élastiquement déformable en cas de pression extérieure venant s'exercer sur le dispositif d'évacuation. Cette situation se rencontre notamment lors de l'intégration du dispositif d'évacuation au sein d'une chape d'un matériau maçonné.

Selon une caractéristique préférée, les moyens de protection s'étendent à partir de la partie rigide située en amont de la liaison continue selon un sens de circulation S d'un fluide à évacuer.

De cette manière, le passage d'un outil de nettoyage amène cet outil de nettoyage à ne pas venir en butée contre l'extrémité terminale des moyens de protection.

En d'autres termes, en s'étendant à partir de la partie rigide située en amont de la liaison continue, les moyens de protection présentent une configuration optimisant la protection offerte à la liaison continue.

Selon une caractéristique préférée, les moyens de protection s'étendent jusqu'à dépasser la liaison continue.

Grâce à cette conception, la liaison continue est complètement protégé par les moyens de protection vis-à-vis du passage d'un outil de nettoyage, et les moyens de protection peuvent également former une protection contre l'écrasement de la liaison continue à cause d'une pression extérieure.

Selon une solution préférentielle, les moyens de protection sont formés à partir d'un matériau présentant une rigidité supérieure à celle du matériau formant la liaison continue.

Bien entendu, les moyens de protection sont alors conçus pour ne pas rigidifier la liaison continue et permettre à la première partie rigide de former un angle avec la seconde partie rigide.

Les moyens de protection ainsi formés offrent une protection à la liaison continue élastiquement déformable par le biais de la rigidité de son matériau.

Par exemple, ce matériau avec une rigidité supérieure peut être du PVC classiquement utilisé pour former un tube de raccordement d'une installation d'évacuation d'un fluide.

Avantageusement, ce matériau avec une rigidité supérieure est identique au matériau constituant la première partie rigide et/ou la seconde partie rigide.

Selon un mode de réalisation préférentielle, les moyens de protection comprennent un élément tubulaire prolongeant la partie rigide située en amont de la liaison continue selon un sens de circulation d'un fluide à évacuer.

Dans ce cas, les moyens de protection s'étendent dans la continuité de la première partie rigide et ne provoquent pas de diminution du diamètre de la conduite d'évacuation.

En effet, le diamètre interne de la liaison continue est alors supérieur au diamètre interne de la première partie rigide de manière à pouvoir loger les moyens de protection dans la continuité de la première partie rigide.

Avantageusement, la liaison continue s'étend entre un premier collet présenté par la première partie rigide et un second collet présenté par la seconde partie rigide.

Ces collets permettent de renforcer l'intégration de la liaison continue sur le dispositif d'évacuation ainsi que de former des butées rigides aptes à permettre une protection au moins partielle de la liaison continue.

En effet, ces collets s'étendent depuis la surface extérieure des parties rigides et forment alors des excroissances susceptibles de venir en butée avec un matériau susceptible d'exercer une pression depuis l'extérieur du dispositif, sur la liaison continue élastiquement déformable.

Selon un mode de réalisation avantageux de l'invention, la liaison continue présente entre le premier collet et le second collet :
- au moins une portion de gorge annulaire destinée à faciliter une déformation élastique ;
- au moins une section pleine destinée à limiter une déformation élastique.

La portion de gorge annulaire permet de faciliter certains degrés de déformation élastique de la liaison continue, et la section pleine permet de limiter ou de supprimer certains mouvements entre la première partie rigide et la seconde partie rigide.

Par exemple, cette section pleine peut être utile pour empêcher la seconde partie rigide de former un angle vers le haut avec la première partie rigide alors que le fluide à évacuer serait amené à s'écouler depuis la première partie rigide en direction de la seconde partie rigide. Un tel angle vers le haut empêcherait la bonne évacuation du fluide.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une représentation schématique du dispositif d'évacuation selon une vue en perspective ;
- la figure 2 est une représentation schématique du dispositif d'évacuation selon une coupe horizontale passant par un axe central du dispositif ;
- la figure 3a est une représentation schématique selon une vue du dessus du dispositif d'évacuation selon l'invention ;
- la figure 3b est une représentation schématique selon une vue de côté du dispositif d'évacuation selon l'invention.

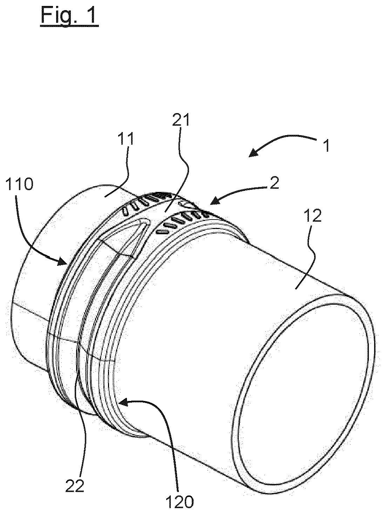

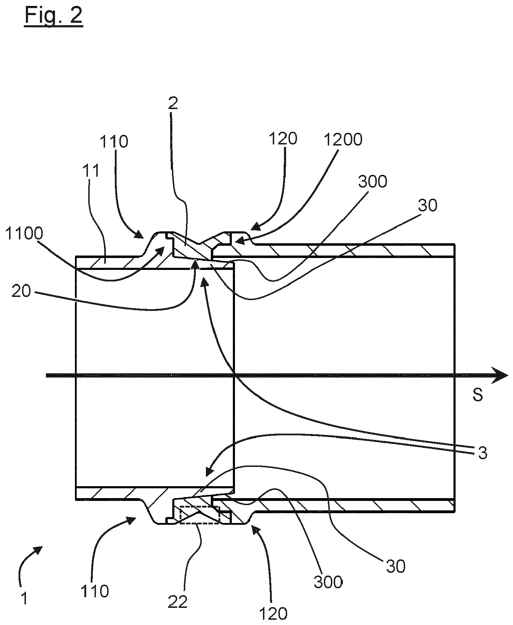

En référence aux figures 1 et 2, le dispositif d'évacuation 1 selon l'invention est destiné à être monté dans une installation d'évacuation d'un fluide.

Plus précisément, le dispositif d'évacuation 1 peut être utilisé dans une installation sanitaire, par exemple pour l'évacuation d'eau à partir d'un évier, d'un lavabo, d'une baignoire, d'un bac de douche, ou encore d'un WC.

Le dispositif d'évacuation 1 est notamment représenté selon un mode de réalisation où il présente la seule fonction de réaliser une conduite d'évacuation avec une entrée et une sortie.

Bien entendu, le dispositif d'évacuation 1 peut être intégré sur un organe d'une installation d'évacuation d'un fluide, tel qu'un siphon de douche ou de bain, et notamment être intégré dès la conception de cet organe d'évacuation d'un fluide.

Par exemple, le dispositif d'évacuation 1 représenté par la figure 1 peut être intégré sur la sortie d'un siphon d'évacuation des eaux collectées dans un bac de douche.

En référence aux figures 1, 2, 3a et 3b, le dispositif d'évacuation 1 selon l'invention comprend :
- une première partie rigide 11 ;
- une liaison continue élastiquement déformable 2 ;
- une seconde partie rigide 12.

La liaison continue 2 élastiquement déformable couple la première partie rigide 11 à la seconde partie rigide 12.

En référence à la figure 2, la première partie rigide 11 forme une entrée ou une sortie d'un fluide à évacuer et la seconde partie rigide 12 forme respectivement une sortie ou une entrée d'un fluide à évacuer.

Préférentiellement, la première partie rigide 11 est située en amont de la seconde partie rigide 12 selon un sens d'évacuation S du fluide à évacuer.

Tel qu'illustré par les figures 1 et 2, la première partie rigide 11 et la seconde partie rigide 12 sont des tubes. La première partie rigide 11 et la seconde partie rigide 12 sont notamment formées à partir d'un matériau plastique rigide tel que par exemple du PVC.

En référence à la figure 2, la liaison continue 2 élastiquement déformable présente une surface interne 20 entre la première partie rigide 11 et la seconde partie rigide 12. En d'autres termes, la liaison continue 2 forme un anneau présentant sur sa face intérieure ladite surface interne 20.

Selon le principe de l'invention, le dispositif d'évacuation 1 comprend également des moyens de protection 3 de la liaison continue 2.

Ces moyens de protection 3 sont distincts de la liaison continue 2 et viennent en recouvrement intégral de la surface interne 20 de la liaison continue 2.

Tel qu'illustré par la figure 2 et selon le présent mode de réalisation, les moyens de protection 3 :
- viennent en recouvrement intégral de la surface interne 20 de la liaison continue 2 ;
- s'étendent à partir de la première partie rigide 11 ;
- s'étendent jusqu'à dépasser la liaison continue 2.

Toujours selon le présent mode de réalisation illustré par la figure 2, les moyens de protection 3 comprennent un élément tubulaire 30 qui prolonge la première partie rigide 11.

L'élément tubulaire 30 est notamment constitué par le même matériau que celui de la première partie rigide 11.

L'élément tubulaire 30 et la première partie rigide 11 sont notamment monobloc ensemble et forment ainsi une pièce unique. Les moyens de protection 3 de la liaison continue 2 sont donc créés lors de la formation de la première partie rigide 11.

Tel qu'illustré par la figure 2, l'élément tubulaire 30 présente une surface extérieure 300 de forme tronconique qui s'étend depuis la première partie rigide en s'amenuisant.

Toujours selon la figure 2, l'élément tubulaire 30 pénètre partiellement dans la seconde partie rigide 12.

L'élément tubulaire 30 vient ainsi en recouvrement partiel d'une partie de la seconde partie rigide 12.

A cet effet, tel que représenté sur la figure 2, au moins l'extrémité de la seconde partie rigide 12, accolée à la liaison continue 2, présente un diamètre interne suffisamment important pour permettre à l'élément tubulaire 30 d'être partiellement inséré à l'intérieur de la première partie rigide 11.

Tel qu'illustré par la figure 2, l'élément tubulaire 30 présente une forme tronconique telle que, en coopération avec le diamètre interne de la seconde partie rigide 12, il existe un jeu (ou en d'autre terme un « espace de débattement ») entre l'élément tubulaire 30 et la seconde partie rigide 12. Ce jeu permet de modifier l'angle formé entre l'axe central de la première rigide 11 et l'axe central de la seconde partie rigide 12.

Le jeu ou « espace de débattement » permet ainsi de modifier l'angle formé à l'aide de la liaison continue 2 tout en lui permettant d'être protégée à l'aide des moyens de protection 3.

Tel qu'évoqué précédemment et en référence aux figures 1 à 3b, la liaison continue 2 élastiquement déformable forme un anneau souple.

La liaison continue 2 élastiquement déformable est plus précisément surmoulée sur les moyens de protection 3.

Cette liaison continue 2 forme ainsi un anneau souple surmoulé sur l'élément tubulaire 30 qui forme un retour rigide s'étendant à partir de la première partie rigide 11.

La liaison continue peut par exemple être réalisée à partir d'un élastomère.

Pour protéger un tel matériau élastiquement déformable, les moyens de protection 3, et plus précisément l'élément tubulaire 30 sont formés à partir d'un matériau présentant une rigidité supérieure à celle du matériau formant la liaison continue 2.

Tel qu'évoqué précédemment, l'élément tubulaire 30 est formé à partir du même matériau que celui qui constitue la première partie rigide 11 et peut notamment être en PVC.

En référence aux figures 1 à 3b, la première partie rigide 11 présente un premier collet 110 et la seconde partie rigide 12 présente un second collet 120.

Le premier collet 110 est présenté par la première partie rigide 11 sur son extrémité à partir de laquelle s'étend l'élément tubulaire 30.

Ce premier collet 110 délimite ainsi la partie à partir de laquelle s'étend l'élément tubulaire 30 des moyens de protection 3. En d'autres termes, au-delà du premier collet 110, la première partie rigide 11 présente l'élément tubulaire 30 des moyens de protection 3.

Tel qu'illustré par la figure 2, la liaison continue 2 s'étend entre le premier collet 110 et le second collet 120.

Ces collets 110, 120 permettent de loger la liaison continue 2, et notamment l'anneau souple formant cette liaison continue 2.

Les collets 110, 120 présentent chacun un épaulement 1100, 1200 permettant d'augmenter la cohésion entre le matériau formant la liaison continue 2 et la première partie rigide 11 et la seconde partie 12.

En référence à la figure 2, les collets 110, 120 présentent un diamètre externe permettant de ménager entre eux deux un espace annulaire dans lequel la liaison continue 2 est logée. Les épaulements 1100, 1200 des collets 110, 120 permettent aux collets de présenter un profil en escalier sur leur côté qui délimite l'espace annulaire. Ces épaulements 1100, 1200 participent à la bonne adhésion de la liaison continue 2 sur les collets 110, 120.

Tel qu'évoqué précédemment, la liaison continue 2 est surmoulée sur les moyens de protection 3 et notamment sur l'élément tubulaire 30.

Aussi, le premier collet 110, l'élément tubulaire 30 et le second collet 120 forment ensemble une gorge recevant la liaison continue 2.

Le premier collet 110 et le second collet 120 forment également une protection rigide encadrant la liaison continue 2.

Ainsi, si par exemple un élément externe présentant une surface plane telle qu'elle peut reposer sur les deux collets 110, 120, alors cet élément externe ne peut pas comprimer directement la liaison continue 2.

Tel que représenté sur les figures 1 à 3b, la liaison continue 2 présente entre le premier collet 110 et le second collet 120 une portion de gorge annulaire 22, entourant de manière circonférentielle et partielle l'espace central du dispositif d'évacuation 1, qui permet de faciliter une déformation élastique. Cette portion de gorge annulaire 22 présente la forme d'un V.

En effet, cette portion de gorge annulaire 22 améliore la souplesse de la liaison continue. Plus précisément, la portion de gorge annulaire 22 favorise une compression de la liaison continue 2 et ainsi la formation d'un angle entre les deux parties rigides 11, 12 autour de la zone comprimée.

Tel qu'illustré par ces figures, la liaison continue 2 présente également entre le premier collet 110 et le second collet 120 une section pleine 21, s'étendant de manière circonférentielle, qui limite une déformation élastique.

Cette section pleine est en l'occurrence située entre deux élargissements des collets 110, 120 qui réduisent la largeur de la liaison continue 2. En d'autres termes, ces élargissements consistent en des débords des collets 110, 120 qui réduisent, à leur niveau, la largeur de l'espace annulaire dans lequel la liaison continue 2 est logée.

Une telle section pleine 21 de la liaison continue 2 limite un mouvement des deux parties rigides 11, 12 autour de ladite section pleine 21 (soit un mouvement amenant une compression de la section pleine 21).

En coopération avec les élargissements des collets 110, 120, cette section pleine 21 permet de supprimer tout mouvement amenant à réduire l'angle formé par les deux parties rigides 11, 12 autour de la section pleine 21.

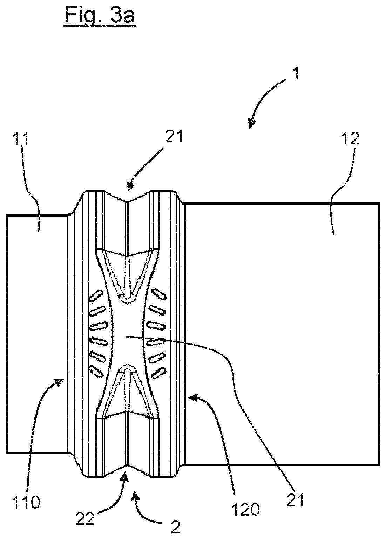

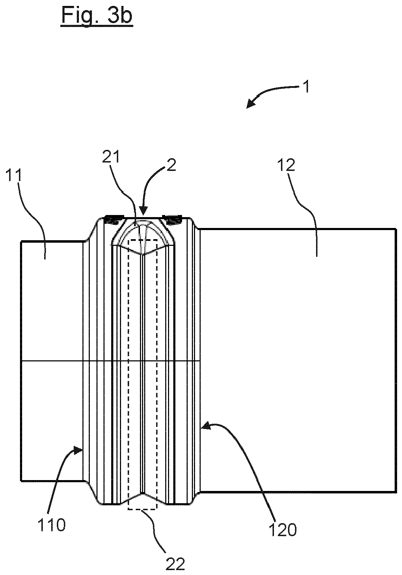

En d'autres termes, tel qu'illustré par la figure 3b, la section pleine 21 de la liaison continue 2 empêche tout mouvement vers le haut de la seconde partie rigide 12 alors que la première partie rigide 11 resterait à l'horizontal.

L'invention permet ainsi au dispositif d'évacuation 1 d'être aisément nettoyé par des moyens mécaniques tel qu'un furet, sans que la liaison continue 2 (qui permet de faciliter la mise en place et l'assemblage du dispositif d'évacuation 1 avec d'autres éléments de tubulure d'une installation d'évacuation d'un fluide) ne puisse être dégradée par le passage de ces moyens mécaniques grâce aux moyens de protection 3.

## Revendications

1. Dispositif d'évacuation (1) destiné à être monté dans une installation sanitaire d'évacuation d'un fluide, le dispositif d'évacuation comprenant :
- une première partie rigide (11) ;
- une seconde partie rigide (12) ;
- une liaison continue (2) élastiquement déformable couplant la première partie rigide à la seconde partie rigide,
la première partie rigide (11) et la seconde partie rigide (12) étant des tubes, la liaison continue présentant une surface interne (20) entre la première partie rigide et la seconde partie rigide,
**caractérisé en ce qu'**il comprend des moyens de protection (3) de la liaison continue, les moyens de protection étant distincts de la liaison continue et venant en recouvrement intégral de la surface interne de la liaison continue, la liaison continue (2) élastiquement déformable étant surmoulée sur les moyens de protection (3).

2. Dispositif d'évacuation (1) selon la revendication précédente, **caractérisé en ce que** les moyens de protection (3) s'étendent à partir de la partie rigide (11, 12) située en amont de la liaison continue selon un sens de circulation (S) d'un fluide à évacuer.

3. Dispositif d'évacuation (1) selon la revendication précédente, **caractérisé en ce que** les moyens de protection (3) s'étendent jusqu'à dépasser la liaison continue.

4. Dispositif d'évacuation (1) selon l'une quelconque des revendications précédentes, **caractérisé en ce que** les moyens de protection (3) sont formés à partir d'un matériau présentant une rigidité supérieure à celle du matériau formant la liaison continue (2).

5. Dispositif d'évacuation (1) selon la revendication précédente, **caractérisé en ce que** les moyens de protection (3) comprennent un élément tubulaire (30) prolongeant la partie rigide (11, 12) située en amont de la liaison continue selon un sens de circulation (S) d'un fluide à évacuer.

6. Dispositif d'évacuation (1) selon l'une quelconque des revendications précédentes, **caractérisé en ce que** la liaison continue (2) s'étend entre un premier collet (110) présenté par la première partie rigide (11) et un second collet (120) présenté par la seconde partie rigide (12).

7. Dispositif d'évacuation (1) selon la revendication précédente, **caractérisé en ce que** la liaison continue (2) présente entre le premier collet (110) et le second collet (120) :
- au moins une portion de gorge annulaire (22) destinée à faciliter une déformation élastique ;
- au moins une section pleine (21) destinée à limiter une déformation élastique.
